# NEUE EUROPÄISCHE PATENTSCHRIFT

(11) **EP 1 375 998 B2**
(45) Veröffentlichungstag und Bekanntmachung des Hinweises auf die Entscheidung über den Einspruch: **15.02.2017**
(45) Hinweis auf die Patenterteilung: 03.05.2006
(21) Anmeldenummer: 02014358.2
(22) Anmeldetag: 27.06.2002
(51) Int. Cl.: F16L 53/00, F01M 13/00, E03B 7/12

(54) **Heizvorrichtung für Fluiddurchführungen und Montageverfahren**
Heating device for pipes and method of assembling the same
Dispositif de chauffage de conduits et procédé de montage

(43) Veröffentlichungstag der Anmeldung: 02.01.2004
(73) Patentinhaber: DBK David + Baader GmbH, Nordring 26 76761 Rülzheim (DE)
(72) Erfinder: Beetz, Klaus Dr., 76149 Karlsruhe (DE); Gschwind, Thomas, 67098 Bad Dürkheim (DE)
(74) Vertreter: Winter, Brandl, Fürniss, Hübner, Röss, Kaiser, Polte - Partnerschaft mbB

(56) Entgegenhaltungen:
- DE-A- 2 432 782
- GB-A- 632 063
- US-A- 4 329 569
- PATENT ABSTRACTS OF JAPAN vol. 1999, no. 01, 29. Januar 1999 (1999-01-29) & JP 10 284229 A (MICRON DENKI KK), 23. Oktober 1998 (1998-10-23)
- PATENT ABSTRACTS OF JAPAN vol. 1998, no. 04, 31. März 1998 (1998-03-31) & JP 09 328789 A (WAAKU:KK), 22. Dezember 1997 (1997-12-22)
- PATENT ABSTRACTS OF JAPAN vol. 1997, no. 02, 28. Februar 1997 (1997-02-28) & JP 08 255681 A (SEKISUI PLASTICS CO LTD), 1. Oktober 1996 (1996-10-01)
- PATENT ABSTRACTS OF JAPAN vol. 1998, no. 08, 30. Juni 1998 (1998-06-30) & JP 10 060958 A (SEKISUI PLASTICS CO LTD), 3. März 1998 (1998-03-03)

## Beschreibung

Die vorliegende Erfindung betrifft eine Heizvorrichtung gemäß dem Oberbegriff des Anspruchs 1. Ferner betrifft die Erfindung ein Verfahren zur Montage einer solchen Heizvorrichtung sowie einen Verbrennungsmotor mit einer derartigen Heizvorrichtung.

Das Kurbelgehäuse (auch Motorblock) eines Verbrennungsmotors nimmt insbesondere den Kurbeltrieb mit Kurbelwelle, Pleuelstangen und Kolben auf. Nach unten hin wird das Kurbelgehäuse üblicherweise durch eine angeschraubte Ölwanne abgeschlossen. Nach oben erfolgt die Abdeckung der im Kurbelgehäuse befindlichen Zylinder durch einen oder mehrere Zylinderköpfe. Das Kurbelgehäuse füllt sich bis zum Zylinderkopf mit Öldämpfen und Gasen, die an den Kolbenringen vorbei aus dem Verbrennungsraum entweichen. Die Pumpbewegung der Kolben setzt diese Öldämpfe und Gase unter Druck. Zum Schutz der Umwelt wird ein Entweichen dieser Gase verhindert. Auch die entweichenden Kraftstoffgase aus dem Kraftstoffbehälter belasten bei stillstehendem Motor die Umwelt. Deshalb ist häufig eine kombinierte Motor- und Kraftstoffbehälter-Entlüftung vorhanden, wobei die Gase und Dämpfe in einem Ausgleichsbehälter gesammelt werden, die Gase kondensieren und zum Kraftstoffbehälter zurückfließen. Während des Startvorgangs saugt der Motor die Dämpfe aus dem Ausgleichsbehälter, und bei laufendem Motor werden die Gase und Dämpfe direkt zum Luftfilter geleitet.

Die Gase und Öldämpfe, mit denen sich das Kurbelgehäuse füllt, werden Blowby-Gase gekannt. Die Hauptkomponenten des Blowby-Gases sind unverbrannte Gase, die große Mengen Kohlenwasserstoffe enthalten.

Eine defekte, verstopfte oder vereiste Entlüftung führt zu einem großen Druck im Kurbelgehäuse, der das Schmieröl aus den Dichtungen (z. B. an der Kurbelwelle, Ölwanne oder aus den Öffnungen für den Messstab) drückt. Es entsteht ein großer Ölverlust, der zum Motorschaden und zu einer Umweltbelastung führen kann.

Um daher insbesondere ein Vereisen der Kurbelgehäuseentlüftung zu verhindem, existieren Konzepte, die Entlüftung mittels einer sogenannten Blowby-Heizung zu erwärmen. Dabei werden, wie beispielsweise in der europäischen Offenlegungsschrift EP 1 164 264 A1 gezeigt, PTC (Positive Temperature Coefficient)-Heizelemente zur Erwärmung eines gasführenden Rohres eingesetzt, die mit Hilfe eines Klebematerials mit dem Rohr fest verbunden sind. Eine solche Lösung hat jedoch den Nachteil, dass im Falle eines Defekts der PTC-Heizelemente der Austausch mit großen Schwierigkeiten und Kosten verbunden ist, insbesondere wenn zusätzlich eine Gehäusung durch Umspritzung erfolgt ist.

Andererseits besteht die Schwierigkeit, dass der Kleber sowohl eine Dichtfunktion zwischen den PTC-Heizelementen und den Kontakten darstellen und gleichzeitig eine sichere mechanische und elektrische Verbindung gewährleisten soll. Problematisch sind hier die deutlich unterschiedlichen thermischen Ausdehnungskoeffizienten zwischen dem gasführenden Rohr und den keramischen PTC-Heizelementen.

Eine weitere Kurbelgehäuseentlüftung ist in der DE 24 32 782 A1 beschrieben, bei der ein mit einem elektrischen Heizleiter ummanteltes Rohr vorgesehen ist.

Weiterhin sind Heizvorrichtungen, bei denen die Fixierung der Heizelemente mit Hilfe von wiederlösbaren Haltevorrichtungen, beispielsweise in der US 6,062,206 gezeigt.

Weitere Heizvorrichtungen für Rohrleitungen, die mit unterschiedlichen Haltevorrichtungen an der Rohrleitung anbringbar sind, sind in der JP 102 84 229, GB 632,063, JP 093 28 789, JP 082 55 681 und JP 100 60 958 beschrieben.

In der US 4,329,569 ist ein Heizmantel für Rohrkörper beschrieben, bei der ein Widerstandsheizelement an einer als Kreiszylinderabschnitt ausgestalteten Haltevorrichtung angebracht ist.

Der Erfindung liegt die Aufgabe zugrunde, eine verbesserte Heizvorrichtung, ein zugehöriges Montageverfahren sowie einen Verbrennungsmotor mit einer derartigen Heizvorrichtung anzugeben, die eine vereinfachte und verbilligte Montage sowie eine verbesserte Kontaktsicherheit bieten.

Diese Aufgabe wird erfindungsgemäß durch den Gegenstand des Patentanspruchs 1 gelöst.

Durch die an den Enden der Klemmfeder ausgeformten Andruckflächen, die im montierten Zustand mechanischen Druck in Richtung auf das Rohr ausüben, ist das Heizelement besonders sicher fixiert.

Erfindungsgemäß ist das mindestens eine Heizelement unter jeweils einer Andruckfläche angeordnet. Dadurch wird ein optimaler Wärmeübergang zwischen dem Heizelement und dem fluidführenden Rohr erreicht. Erfindungsgemäß wird das Heizelement direkt elektrisch von der Klemmfeder kontaktiert.

Vorteilhafte Weiterbildungen der Erfindung sind Gegenstand mehrerer Unteransprüche.

Die vormontierte Heizvorrichtung mit den geklemmten PTC-Heizelementen kann beispielsweise sehr einfach und kostensparend zwischen zwei Kunststoffgehäusehälften eingebaut werden, die verclipst oder verschweißt sind. Dadurch entstehen Gestaltungsfreiheit in der Raumform der Heizvorrichtung. Weiterhin kann durch die Verwendung einer Klemmfeder auch bei unterschiedlichen thermischen Ausdehnungen der Heizelemente und der Haltevorrichtung ein sicherer elektrischer Kontakt erreicht werden.

Der Erfindung liegt der Gedanke zugrunde, dass dadurch, dass die Haltevorrichtung eine Klemmfeder mit halbkreisförmigem Querschnitt ist, welche das Rohr zumindest teilweise umgreift und in einer Richtung, die im wesentlichen quer zur Richtung des Fluidstroms verläuft, montierbar ist, erreicht werden kann, dass die Montage und Demontage der Heizvorrichtung auf besonders einfache Weise erfolgen kann. So ist es im Falle eines Defekts an den PTC-Elementen nicht unbedingt erforderlich, das gesamte vormontierte Rohr zu demontieren, sondern es genügt, die Klemmfeder seitlich abzuziehen. Auf diese Weise können sowohl bei der Montage wie auch bei einer eventuell notwendigen Demontage Zeit und Kosten gespart werden.

Gemäß einer vorteilhaften Ausführungsform ist die Klemmfeder durch mindestens einen Ausschnitt in mindestens zwei Federarme unterteilt, die an ihren gegenüberliegenden Enden durch Stege miteinander verbunden sind. Diese Ausgestaltung erlaubt eine besonders materialsparende Herstellung sowie eine kraftsparende Montage der Klemmfeder.

Um zu vermeiden, dass die Heizvorrichtung während des Betriebes ihre Position ändert, kann sie so ausgestaltet sein, dass sie in an dem äußeren Umfang des Rohrs angebrachte Aussparungen einschiebbar ist.

Eine besonders gleichmäßige Kraftverteilung kann erreicht werden, wenn die Andruckflächen einander im wesentlichen diametral gegenüberstehen.

Um die Montage der Heizelemente zu erleichtern und gleichzeitig ihre geometrische Position im Betrieb zu sichern, kann die Heizvorrichtung weiterhin eine nichtleitende, beispielsweise aus einem Kunststoff gefertigte Halterung aufweisen, welche das mindestens eine Heizelement in axialer Richtung an dem Rohr positioniert.

Zur Erleichterung der Montage und Wartung kann auf dieser Halterung einen im wesentlichen halbkreisförmigen Querschnitt aufweisen, das Rohr zumindest teilweise umgreifen und in einer Richtung, die im wesentlichen quer zur Richtung des Fluidstroms verläuft, montierbar sein.

Die Positionierung der Heizelemente erfolgt auf besonders einfache Weise, wenn die Halterung Öffnungen aufweist, in die das Heizelement einlegbar ist.

Um die Klemmfeder im montierten Zustand zu sichern und während der Montage zu führen, können an dem äußeren Umfang der Halterung Aussparungen angebracht sein, welche die Klemmfeder im montierten Zustand aufnehmen.

Anhand der in den beiliegenden Zeichnungen dargestellten Ausgestaltungen wird die Erfindung im folgenden näher erläutert. Ähnliche oder korrespondierende Einzelheiten der erfindungsgemäßen Heizvorrichtung sind in den Figuren mit denselben Bezugszeichen versehen. Es zeigen:
Figur 1 eine perspektivische Darstellung eines Blowby-Rohrs mit einer Heizvorrichtung mit noch nicht montierter Klemmfeder;
Figur 2 eine Seitenansicht der Heizvorrichtung aus Figur 1 nach vollständiger Montage;
Figur 3 eine weitere Seitenansicht der Heizvorrichtung aus Figur 2;
Figur 4 eine weitere Seitenansicht der Heizvorrichtung aus Figur 2;
Figur 5 einen Schnitt durch die Heizvorrichtung der Figur 2 entlang der Schnittlinie D-D;
Figur 6 eine Ansicht von oben auf die Anordnung der Figur 2.

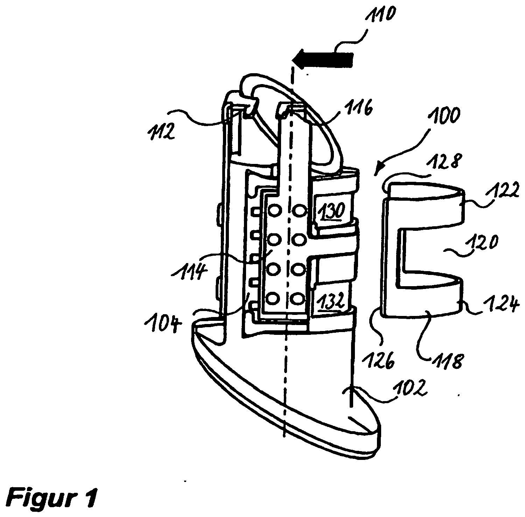

Figur 1 zeigt eine perspektivische Darstellung einer Heizvorrichtung 100, wie sie für eine Blowby-Heizung an einem Kraftfahrzeug verwendet wird. Grundsätzlich kann eine solche Heizvorrichtung jedoch überall dort eingesetzt werden, wo Rohrstücke, welche strömende Fluide führen, erwärmt werden sollen. Solche Fluide können neben den verschiedensten Gasen auch Flüssigkeiten, wie beispielsweise Wasser, sein.

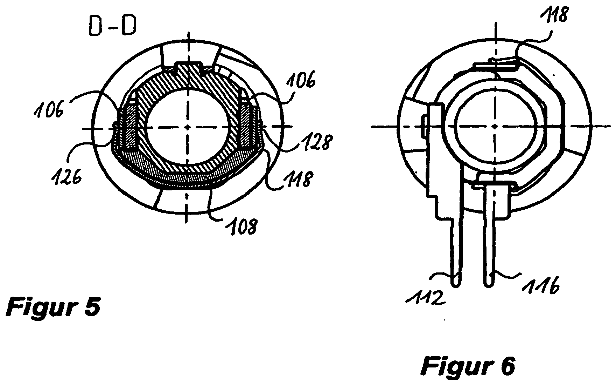

Wie aus Figur 1 ersichtlich, bei der die Heizvorrichtung 100 im teilweise montierten Zustand dargestellt ist, wird die Heizvorrichtung 100 in entsprechenden Aussparungen 104 an dem gasführenden Rohr 102 montiert. Die eigentliche Erwärmung erfolgt mit Hilfe von Heizelementen mit positivem Temperaturkoeffizienten, sogenannten PTC (Positive Temperatur Coefficient)-Elementen 106. Die PTC-Elemente 106, die aus der Schnittdarstellung der Figur 5 ersichtlich werden, sind in direktem Kontakt mit dem gasführenden Rohr 102 und werden in ihrer Position durch eine aus isolierendem Material, vorzugsweise einem Kunststoff, hergestellte Halterung 108 gehalten. Diese Halterung 108 besitzt einen im Wesentlichen halbkreisförmigen Querschnitt und kann in Richtung 110 über das Rohr 102 geschoben werden. Die Montagerichtung 110, und damit auch eine mögliche Demontagerichtung, verlaufen hier quer zur Längserstrekkung des Rohres 102 und damit quer zum Gasstrom. Auf diese Weise kann die Heizvorrichtung 100 auch dann demontiert werden, wenn das Rohrstück 102 fest an einem Motorblock montiert ist.

Die elektrische Kontaktierung der PTC-Elemente erfolgt einerseits über einen mit dem. Rohrstück 102 verbundenen ersten elektrischen Anschluss 112, andererseits über einen mit einem Kontaktblech 114 einstückig ausgeführten zweiten elektrischen Anschluss 116. Dabei kann der erste elektrische Anschluss 112, und damit das Rohr 102, auf negatives Potential gelegt sein, und der zweite elektrische Anschluss 116 und damit das Kontaktblech 114 auf positives Potential. Bei der Montage wird das Kontaktblech ebenfalls in Richtung 110 über das Rohr 102 geschoben. Zur endgültigen mechanischen Fixierung und optimalen elektrischen Kontaktierung wird die Heizvorrichtung 100 schließlich durch eine Klemmfeder 118 fixiert. Die Klemmfeder 118 besitzt einen im Wesentlichen halbkreisförmigen Querschnitt und ist durch einen Ausschnitt 120 in zwei Federarme 122, 124 geteilt. Die beiden Federarme 122, 124 sind durch die beiden Stege 126 und 128, welche die eigentlichen Andruckflächen bilden, miteinander verbunden. Die Klemmfeder 118 ist so gebogen. dass sie in Richtung 110 über die Anordnung geschoben werden kann und mit ihren Andruckflächen 126, 128 radial nach innen gerichteten Druck auf die PTC-Elemente ausüben kann. Die Federarme 122, 124 werden im montierten Zustand von Aussparungen 130, 132 in der Halterung 108 aufgenommen. Für eine leichtere Montage sind die Ränder der Andruckflächen 126 und 128 der Klemmfeder 118 leicht nach außen gebogen.

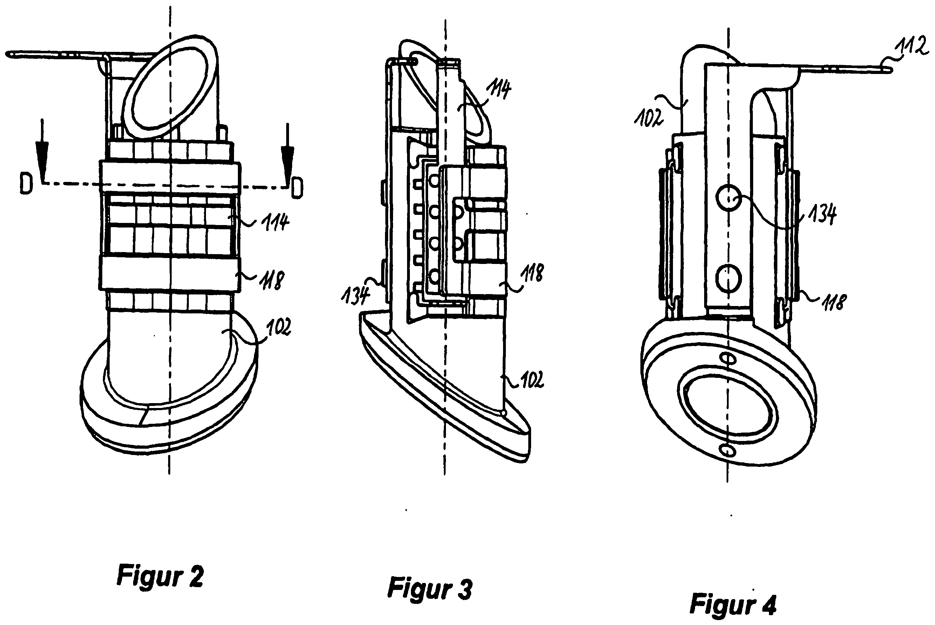

Figuren 2 bis 4 zeigen eine Seitenansicht des Rohrstücks 102 mit der vollständig montierten Heizvorrichtung 100 aus Figur 1. Insbesondere in Figur 3 wird die Lage der montierten Klemmfeder 118 deutlich. Figur 4 zeigt die Befestigung einer Anschlussfahne mit dem ersten elektrischen Anschluss 112 an dem gasführenden Rohr 102 mit Hilfe von Nieten 134.

In Figur 5 ist ein Schnitt durch die Anordnung der Figur 2 entlang der Schnittlinie D-D gezeigt Dabei werden insbesondere die symmetrisch angeordneten PTC-Elemente 106 sichtbar. Diese symmetrische Anordnung gewährleistet eine besonders gleichmäßige Erwärmung des Rohres 102 und damit der darin geführten Gase. Die Klemmfeder 118 ist so vorgespannt, dass ihre Andruckflächen 126 und 128 jeweils Druckkräfte, die in Richtung auf die Mittelachse des Rohres gerichtet sind, auf die PTC-Elemente ausüben. Dadurch kann eine besonders effektive Kontaktgabe zwischen der Rohraußenfläche und dem PTC-Element 106 gewährleistet werden.

Figur 6 zeigt eine Draufsicht von oben auf die Anordnung der Figuren 1 bis 5.

Obwohl in den Figuren 1 bis 6 keine zusätzliche schützende Gehäusung der Heizvorrichtung 100 und des gasführenden Rohrs in diesen Bereich gezeigt ist, so kann doch eine solche Gehäusung vorgesehen sein. Damit der Vorteil der sicheren Kontaktierung erhalten bleibt und außerdem die Federwirkung der Klemmfeder 118 nicht eingeschränkt wird, kann ein solches Gehäuse als eine eventuelle durch ein Gegenstück verschließbare Halbschale ausgeführt sein, die in Richtung 110 über das Rohrstück 102 geschoben wird. Das Gehäuse kann auch eine Ausbildung von zwei Halbschalen besitzen.

Selbstverständlich kann die vorliegende Heizvorrichtung in analoger Weise auch für rechtförmige Rohrquerschnitte ausgeführt werden. In diesem Fall wären die Heizelemente an zwei einander gegenüberliegenden Seitenflächen eines rechteckförmigen Rohrquerschnitts angeordnet und die Klemmfeder würde im wesentlichen den halben Rohrquerschnitt umgreifen. Auch bei einer solchen Anordnung wäre die leichte Montierbarkeit und Kontaktsicherheit durch eine Montagerichtung, die im wesentlichen quer zur Richtung des Fluidstroms verläuft, gewährleistet.

Es wird auf ein Kontaktblech, wie es in den vorliegenden Zeichnungen gezeigt ist, verzichtet, wenn der elektrische Anschluss 116 direkt an die Klemmfeder 118 angeformt ist.

## Patentansprüche

1. Heizvorrichtung (100) für Blowby-Rohre, mit wenigstens einem Heizelement (106) und einer durch eine Klemmfeder (118) gebildete Haltevorrichtung, durch die das Heizelement (106) an einem fluidführenden Rohr (102) fixierbar ist, wobei die Klemmfeder (118) in einer Richtung (110), die im Wesentlichen quer zur Richtung des Fluidstroms verläuft, montierbar ist, **dadurch gekennzeichnet, dass** die Klemmfeder (118) Andruckflächen (126, 128) aufweist und das als PTC-Heizelement ausgestaltete Heizelement (106) im montierten Zustand unter einer der Andruckflächen (126, 128) angeordnet und radial nach innen gegen die Außenfläche des Rohres (102) gedrückt ist, wobei die Klemmfeder (118) als ein Kontaktblech ausgebildet ist, welches das Heizelement (106) elektrisch kontaktiert.

2. Heizvorrichtung nach Anspruch 1, **dadurch gekennzeichnet, dass** die Klemmfeder (118) einen halbkreisförmigen Querschnitt aufweist und das Rohr (102) zumindest teilweise umgreift.

3. Heizvorrichtung nach Anspruch 1 oder 2, **dadurch gekennzeichnet, dass** die Klemmfeder (118) mindestens einen Ausschnitt (120) zur Bildung mindestens eines Federarms (122, 124) aufweist.

4. Heizvorrichtung nach einem der Ansprüche 1 bis 3, **dadurch gekennzeichnet, dass** sie in an dem äußeren Umfang des Rohrs (102) angebrachte Aussparungen (104) einschiebbar ist.

5. Heizvorrichtung nach einem der Ansprüche 1 bis 4, **dadurch gekennzeichnet, dass** die Andruckflächen (126, 128) einander im wesentlichen diametral gegenüberstehen.

6. Heizvorrichtung nach einem der Ansprüche 1 bis 5, **dadurch gekennzeichnet, dass** sie weiterhin eine nichtleitende Halterung (108) aufweist, welche so ausgeführt ist, dass sie das mindestens eine Heizelement (1 06) in axialer Richtung an dem Rohr (1 02) positioniert.

7. Heizvorrichtung nach Anspruch 6, **dadurch gekennzeichnet, dass** die Halterung (108) einen im Wesentlichen halbkreisförmigen Querschnitt aufweist, das Rohr (102) zumindest teilweise umgreift und in einer Richtung (110), die im Wesentlichen quer zur Richtung des Fluidstroms verläuft, montierbarist.

8. Heizvorrichtung nach Anspruch 6 oder 7, **dadurch gekennzeichnet, dass** die Halterung (108) Öffnungen aufweist, in die das Heizelement (106) einlegbar ist.

9. Heizvorrichtung nach einem der Ansprüche 6 bis 8, **dadurch gekennzeichnet, dass** an dem äußeren Umfang der Halterung (108) Aussparungen (130,132) angebracht sind, welche die Klemmfeder (118) im montierten Zustand aufnehmen.

10. Verfahren zur Montage einer Heizvorrichtung für Blowby-Rohre nach einem der vorhergehenden Patentansprüche, mit wenigstens einem Heizelement, das die folgenden Schritte aufweist:
Montieren des Heizelements an einem fluidführenden
Rohr, so dass das Rohr beheizbar ist,
Klemmen des Heizelementes radial gegen die
Außenfläche des Rohres durch Aufschieben einer
Klemmfeder in einer Richtung, die im Wesentlichen
quer zur Richtung des Fluidstroms
verläuft, und durch Anordnen des Heizelementes
unter einer Andruckfläche der Klemmfeder.

11. Verfahren nach Anspruch 10, **dadurch gekennzeichnet, dass** die Klemmfeder einen im Wesentlichen halbkreisförmigen Querschnitt aufweist.

12. Verfahren nach Anspruch 10 oder 11, **dadurch gekennzeichnet, dass** das Montieren des Heizelements umfasst:
Aufschieben einer Halterung mit im Wesentlichen
halbkreisförmigem Querschnitt in einer
Richtung, die im Wesentlichen quer zur Richtung
des Fluidstroms verläuft,
Einlegen des mindestens einen Heizelements
in entsprechende Öffnungen, die an der Halterung
angebracht sind.

13. Verfahren nach einem der Ansprüche 10 bis 12, **dadurch gekennzeichnet, dass** es vor dem Aufschieben der Klemmfeder den folgenden Schritt umfasst:
Aufschieben eines Kontaktblechs zur elektrischen
Kontaktierung des Heizelements in einer
Richtung, die im Wesentlichen quer zur Richtung
des Fluidstroms verläuft.

14. Verbrennungsmotor mit einer Heizvorrichtung nach einem der Ansprüche 1 bis 9, **dadurch gekennzeichnet, dass** der Fluidstrom ein Gasstrom einer Blowby-Entlüftung ist.

## Claims

1. Heating device (100) for blowby pipes, having at least one heating element (106) and holding device formed by a clamping spring (118), by means of which the heating element (106) is fixable to a fluid-carrying pipe (102), wherein the clamping spring (118) is mountable in a direction (110) which extends substantially transversely to the direction of the fluid flow, **characterized in that** the clamping spring (118) has press-on faces (126, 128) and the heating element (106) in the form of a PCT heating element is disposed under one of the press-on faces (126, 128) in the mounted state and is pressed radially inwards against the outer surface of the pipe (102), wherein the clamping spring (118) is formed as a contact plate which makes electrical contact with the heating element (106).

2. Heating device according to claim 1, **characterized in that** the clamping spring (118) has a semi-circular cross-section and at least partly encompasses the pipe (102).

3. Heating device according to claim 1 or 2, **characterized in that** the clamping spring (118) has at least one cut-out (120) in order to from at least one spring arm (122, 124).

4. Heating device according to one of the claims 1 to 3, **characterized in that** it is insertable into recesses (104) formed on the outer circumference of the pipe (102).

5. Heating device according to one of the claims 1 to 4, **characterized in that** the press-on faces (126, 128) oppose one another substantially diametrically.

6. Heating device according to one of the claims 1 to 5, **characterized in that** it furthermore has a non-conducting mount (108), which is formed in such a way that it positions the at least one heating element (106) in the axial direction at the pipe (102).

7. Heating device according to claim 6, **characterized in that** the mount (108) has a substantially semi-circular cross-section, at least partly encompasses the pipe (102) and is mountable in a direction (110) which extends substantially transversely to the direction of the fluid flow.

8. Heating device according to claim 6 or 7, **characterized in that** the mount (108) has apertures, into which the heating element (106) may be inserted.

9. Heating device according to one of the claims 6 to 8, **characterized in that**, on the outer circumference of the mount (108), recesses (130, 132) are formed which receive the clamping spring (118) in the mounted state.

10. Method of assembling a heating device for blowby pipes according to one of the preceding claims, comprising at least one heating element, which has the following steps:
Mounting of the heating element on a fluid-carrying pipe, so that the pipe may be heated,
Clamping of the heating element radially against the outer surface of the pipe by applying a clamping spring in a direction which extends substantially transversely to the direction of the fluid flow, and by placing the heating element under a press-on face of the clamping spring.

11. Method according to claim 10, **characterized in that** the clamping spring has a substantially semi-circular cross-section.

12. Method according to claim 10 or 11, **characterized in that** the mounting of the heating element comprises:
Application of a mount with substantially semi-circular cross-section in a direction which extends substantially transversely to the direction of the fluid flow,
Insertion of the at least one heating element into corresponding apertures formed on the mount.

13. Method according to one of the claims 10 to 12, **characterized in that** it comprises the following step before application of the clamping spring:
Application of a contact plate for electrically contacting the heating element in a direction which extends substantially transversely to the direction of the fluid flow.

14. Internal combustion engine comprising a heating device according to one of claims 1 to 9, **characterized in that** the fluid flow is a gas flow of a blowby vent.

## Revendications

1. Dispositif de chauffage (100) pour tuyaux de « blowby », avec au moins un élément de chauffage (106) et un dispositif de maintien formé par un ressort de serrage (118), grâce auquel l'élément de chauffage (106) peut être fixé à un tuyau (102) conduisant le fluide, le ressort de serrage (118) pouvant être monté dans un sens (110) qui passe essentiellement transversalement au sens du courant de fluide, **caractérisé en ce que** le ressort de serrage (118) présente des surfaces de pression (126, 128) et l'élément de chauffage (106) configuré comme élément de chauffage à coefficient positif de température (106) est disposé à l'état monté sous une des surfaces de pression (126, 128) et est appuyé radialement vers l'intérieur contre la surface externe du tuyau (102), le ressort de serrage (118) étant réalisé comme une plaque de contact, qui met en contact électriquement l'élément de chauffage (106).

2. Dispositif de chauffage selon la revendication 1, **caractérisé en ce que** le ressort de serrage (118) présente une section transversale semi-circulaire et enveloppe le tuyau (102) au moins partiellement.

3. Dispositif de chauffage selon la revendication 1 ou 2, **caractérisé en ce que** le ressort de serrage (118) présente au moins une découpure (120) pour former au moins un bras de ressort (122, 124).

4. Dispositif de chauffage selon l'une des revendications 1 à 3, **caractérisé en ce qu'**il peut coulisser dans des évidements (104) agencés sur la périphérie externe du tuyau (102).

5. Dispositif de chauffage selon l'une des revendications 1 à 4, **caractérisé en ce que** les surfaces de pression (126, 128) sont essentiellement diamétralement opposées l'une à l'autre.

6. Dispositif de chauffage selon l'une des revendications 1 à 5, **caractérisé en ce qu'**il présente encore une fixation non conductrice (108) qui est réalisée de manière telle qu'elle positionne l'au moins un élément de chauffage (106) dans le sens axial sur le tuyau (102).

7. Dispositif de chauffage selon la revendication 6, **caractérisé en ce que** la fixation (108) présente une section transversale essentiellement semi-circulaire, qui enveloppe au moins partiellement le tuyau (102) et peut être montée dans un sens (110) qui passe essentiellement transversalement au sens du courant de fluide.

8. Dispositif de chauffage selon la revendication 6 ou 7, **caractérisé en ce que** la fixation (108) présente des ouvertures dans lesquelles peut être inséré l'élément de chauffage (106).

9. Dispositif de chauffage selon l'une des revendications 6 à 8, **caractérisé en ce que** sur la périphérie externe de la fixation (108) sont agencés des évidements (130, 132) qui logent le ressort de serrage (118) à l'état monté.

10. Procédé de montage d'un dispositif de chauffage pour des tuyaux de « blowby » selon l'une des revendications précédentes, comprenant au moins un élément de chauffage, lequel procédé présente les étapes suivantes :
le montage de l'élément de chauffage sur un tuyau conducteur de fluide, de sorte que le tuyau peut être chauffé,
le serrage de l'élément de chauffage radialement contre la surface externe du tuyau par glissement d'un ressort de serrage dans un sens qui passe essentiellement transversalement au sens du courant de fluide, et en disposant l'élément de chauffage sous une surface de pression du ressort de serrage.

11. Procédé selon la revendication 10, **caractérisé en ce que** le ressort de serrage présente une section transversale essentiellement semi-circulaire.

12. Procédé selon la revendication 10 ou 11, **caractérisé en ce que** le montage de l'élément de chauffage comprend :
le glissement d'une fixation comprenant une section transversale essentiellement semi-circulaire dans un sens qui passe essentiellement transversalement au sens du courant de fluide,
l'insertion de l'au moins un élément de chauffage dans des ouvertures correspondantes qui sont agencées sur la fixation.

13. Procédé selon l'une des revendications 10 à 12, **caractérisé en ce qu'**il comprend l'étape suivante avant le glissement du ressort de serrage :
le glissement d'une plaque de contact destinée à la mise en contact électrique de l'élément de chauffage dans un sens qui passe essentiellement transversalement au sens du courant de fluide.

14. Moteur à combustion comprenant un dispositif de chauffage selon l'une des revendications 1 à 9, **caractérisé en ce que** le courant de fluide est un courant de gaz d'une ventilation de « blowby ».
